# EUROPÄISCHE PATENTANMELDUNG

(11) **EP 1 939 311 A2**
(43) Veröffentlichungstag der Anmeldung: **02.07.2008**
(21) Anmeldenummer: 07024590.7
(22) Anmeldetag: 19.12.2007
(51) Int. Cl.: C22B 21/00, C22B 26/22, C21C 7/076

(54) **Metallbadflussmittel, dessen Verwendung sowie Verfahren zur Behandlung eines Metallbades und Verfahren zur Herstellung eines Metallbadflussmittels**

(30) Priorität: 31.05.2007 DE 102007025602; 29.12.2006 US 878009 P
(71) Anmelder: Hoesch Metallurgie GmbH, 58515 Niederzier (DE)
(72) Erfinder: Ohm, Volker, Dr., 52222 Stolberg (DE)
(74) Vertreter: Reuther, Martin

(57) **Zusammenfassung**

Es ist Aufgabe vorliegender Patentanmeldung, ein festes Metallbadflussmittel, ein Verfahren zur Behandlung eines Metallbades und ein Verfahren zur Herstellung eines Metallbadflussmittels bereitzustellen, die ähnlich betriebssicher, wie bei den bekannten festen Metallbadflussmitteln, Verunreinigungen aus Metallbädern entfernen können, ohne zuviel des entsprechenden Metalls auszutragen oder neue Verunreinigungen einzutragen.
Die Erfindung betrifft ein Metallbadflussmittel, welches aus mindestens zwei separaten festen Komponenten besteht.
Durch die Verwendung separater fester Komponenten ist es möglich, diese gemeinsam dem Bad zuzuführen und dennoch zu verschiedenen Zeitpunkten oder an verschiedenen Orten wirksam werden zu lassen.

## Beschreibung

Die Erfindung betrifft ein Metallbadflussmittel, dessen Verwendung sowie ein Verfahren zur Behandlung eines Metallbades und ein Verfahren zur Herstellung eines Metallbadflussmittels.

Es ist aus dem Stand der Technik bekannt, Metallbäder einer reinigenden Behandlung zu unterziehen, um Verunreinigungen aus den Metallen zu entfernen, wobei die Metalle dann anschließend weiterveräußert bzw. einer Weiterbehandlung zugeführt werden. Hierbei werden beispielsweise aus Aluminium (Al) mittels Chlorgas Natrium (Na), Calcium (Ca) oder Lithium (Li) - falls Lithiumfluorid (LiF) ein entsprechender A-luminiumelektrolyt zugeführt wurde - entfernt. Allerdings ist der Umgang mit Chlorgas gefährlich sowie Umwelt belastend und aus diesen Gründen häufig untersagt. Anstelle dessen ist man mittlerweile dazu übergegangen, feste Metallbadflussmittel anstelle von Chlorgas in die Metallbäder einzubringen, beispielsweise einzublasen, um auf diese Weise Verunreinigungen zu entfernen. So lassen sich aus Al-Bädern beispielsweise mittels Magnesiumchlorid (MgCl₂) oder Kaliumchlorid (KCl) bzw. Mischungen hiervon Na-, Ca-, Li- oder H-Verunreinigungen gut entfernen. Hierbei entstehende Krätze ist jedoch verhältnismäßig nass, d.h. sie enthält selbst einen hohen Anteil an Aluminium, so dass die Aluminiumreinigung mit verhältnismäßig hohen Al-Verlusten verbunden ist. Es ist darüber hinaus bekannt, auf die Krätze anschließend Abkrätzsalze, die in der Regel Fluoride, beispielsweise CaF₂, enthalten, aufzubringen, die dann Aluminium aus der Krätze wieder entfernen. Dieses ist jedoch nur zu einem gewissen Grad möglich und führt in der Regel auch zu einem Wiedereintrag der entfernten Verunreinigungen, also beispielsweise des Kalziums. Ähnliche Probleme sind auch bei anderen Metallbädern, beispielsweise Magnesiumbädern, bekannt, wobei dort naturgemäß andere feste Metallbadflussmittel zur Anwendung kommen.

Es ist Aufgabe vorliegender Patentanmeldung, ein festes Metallbadflussmittel, ein Verfahren zur Behandlung eines Metallbades und ein Verfahren zur Herstellung eines Metallbadflussmittels bereitzustellen, die ähnlich betriebssicher, wie bei den bekannten festen Metallbadflussmitteln, Verunreinigungen aus Metallbädern entfernen können, ohne zuviel des entsprechenden Metalls auszutragen oder neue Verunreinigungen einzutragen.

Als Lösung schlägt die Erfindung erstens ein festes Metallbadflussmittel vor, welches sich dadurch auszeichnet, dass das Metallbadflussmittel aus mindestens zwei separaten festen Komponenten besteht. Durch die Verwendung separater fester Komponenten ist es möglich, diese gemeinsam dem Bad zuzuführen und dennoch zu verschiedenen Zeitpunkten oder an verschiedenen Orten wirksam werden zu lassen.

So wird in diesem Zusammenhang die Bezeichnung "separater fester Komponenten" dahingehend zu verstehen, dass derartige Komponenten ohne einen Übergang in einen anderen Aggregatzustand oder ohne chemische Eingriffe voneinander getrennt werden können. So können dann derartige Komponenten noch in festen Zustand in dem Bad in gewünschtem Maße reagieren, wobei die Komponenten in der Schmelze getrennt und entsprechend verteilt werden können. Die Verteilung kann hierbei einerseits durch Strömungen in dem Bad aber andererseits durch äußere Einflüsse, wie beispielsweise elektrische oder magnetische Felder, die Gravitation oder ähnliche Einflussmöglichkeiten, erfolgen, wobei nicht zwingend eine homogene Verteilung erzielt werden muss, sondern auch andere Verteilungen in dem Metallbad sinnvoll sein können. Es ist insbesondere auch denkbar, dass die beiden Komponenten zwar miteinander verbunden, beispielsweise durch längere Lagerung miteinander verbacken, sind, sich jedoch durch die Belastung beim Einblasen oder auch unmittelbar beim Einbringen in das Metallbad trennen, ohne ihren Aggregatzustand schon beim Trennen zu verändern, d.h., dass diese Komponenten auch in dem Metallbad zumindest kurzzeitig als feste Komponenten vorliegen.

Durch die Erfindung lässt sich, wie unmittelbar ersichtlich, eine entsprechende Reinigungskapazität wie bei bekannten Metallbadflussmitteln erzielen, da ohne Weiteres identische Komponenten diesbezüglich zu Anwendung kommen können. Andererseits können andere Komponenten des erfindungsgemäßen Metallflussmittels zu anderen Zwecken ausgestaltet sein, beispielsweise um nichtmetallische Verunreinigungen zu entfernen und eine möglichst trockene Krätze zu bilden. Auch können Komponenten dafür vorgesehen sein, die Krätze derart auszubilden, dass sie von der Metallbadoberfläche gut abnehmbar ist.

Zweitens schlägt die Erfindung entsprechend ein Verfahren zur Behandlung eines Metallbades vor, bei welchem ein festes Metallbadflussmittel dem Metallbad aufgegeben wird und welches sich dadurch auszeichnet, dass zumindest zwei separate feste Komponenten des Metallbadflussmittels vor der Aufgabe vermischt und anschließend gemeinsam dem Metallbad aufgegeben werden.

Eine derartige Vorgehensweise ist wesentlich ökonomischer als herkömmliche Verfahren, da lediglich ein Aufgabeschritt für das Metallbadflussmittel vorgesehen ist, so dass das entsprechende Verfahren äußerst betriebssicher durchgeführt werden kann.

Dieses gilt insbesondere für Behandlungsverfahren, bei denen das Metallbadflussmittel eingeblasen wird, da letzteres lediglich einmal durchgeführt werden braucht, um beide Komponenten in das Metallbad einzubringen und somit ansonsten auf Ein- bzw. Aufbringungsschritte diesbezüglich verzichten zu können, so dass das Metallbad unmittelbar weiterverarbeitet oder auch in einen anderen Behälter umgefüllt werden kann.

In diesem Zusammenhang sei erwähnt, dass vorliegend unter dem Begriff Metallbad jede Schmelze eines Metalls verstanden sein soll, bei welcher ein Großteil des Metalls in flüssiger Form und lediglich ein geringer Teil in fester Form, beispielsweise als Bestandteil einer Krätze oder als Bestandteil von Schlacke, vorliegt. Insbesondere sind somit auch flüssige Metallströme als Metallbäder bezeichnet.

Drittens schlägt vorliegende Erfindung ein Verfahren zur Herstellung eines Metallbadflussmittels vor, welches sich dadurch auszeichnet, dass zumindest zwei separate feste Komponenten des Metallbadflussmittels miteinander separierbar vermischt werden, so dass ein aus mindestens zwei separaten festen Komponenten bestehendes Metallbadflussmittel mit den vorstehend beschriebenen Vorteilen bereitgestellt wird.

Vorzugsweise besteht das Metallbadflussmittel aus einem mindestens zwei Komponenten aufweisenden Granulat, wobei insbesondere jeder der separaten festen Komponenten des Metallbadflussmittels eine Komponente des Granulats darstellen kann. Hierbei können insbesondere zur Herstellung die Bestandteile zumindest einer der beiden Komponenten zunächst miteinander fest zu Bestandeilekörpern verbunden werden, die dann granuliert werden.

Ein derartiges Granulat ist an sich ausreichend eigenstabil, so dass es ohne weiteres einem Metallbad, beispielsweise auch über ein Gebläse, zugeführt werden kann. Ebenso ist eine Lagerung auch über längere Zeit ohne Weiteres möglich, da Granulate auch chemisch verhältnismäßig stabil sind und gut gegen äußere Einflüsse geschützt werden können.

Vorzugsweise kann diese Vorgehensweise bei beiden Komponenten erfolgen, wobei die Bestandteilekörper beider Komponenten gegebenenfalls auch gemeinsam granuliert werden können.

Hierbei können die Bestandteilekörper auf jede geeignete Art bereitgestellt werden. Beispielsweise ist es möglich, einzelne Bestandteile miteinander zu verschmelzen und einen dann wieder erstarrten Körper zu granulieren. Ebenso können auch auf andere Weise, beispielsweise aus flüssigen Lösungen, Bestandteilekörper, beispielsweise durch Kristallzüchtungen oder Auskristallisieren, gewonnen werden. Auch durch Sinterprozesse können entsprechende Bestandteilekörper bereitgestellt werden.

Vorzugsweise ist wenigstens eine Komponente des Metallbadflussmittels ein Salz. Insbesondere kann das Metallflussmittel zur Gänze eine Salzmischung sein, bei welcher jedes der gemischten Salze eine Komponente des Metallflussmittels darstellt. Salze lassen sich entsprechend der vorstehend und nachstehend erläuterten Vorgänge besonders einfach verarbeiten und in ein Metallbad einbringen. Außerdem stellen sie verhältnismäßig stabile Zustände der Komponenten bzw. Bestandteile des Metallbadflussmittels dar, so dass diese auch über längere Zeit gelagert werden können.

In einer bevorzugten weil besonders einfach präzise umzusetzenden Ausgestaltung weisen die beiden Komponenten des Metallbadflussmittels einen unterschiedlichen Schmelzpunkt auf. Auf diese Weise kann besonders einfach realisiert werden, dass die Komponenten zu unterschiedlichen Zeitpunkten in dem Metallbad wirksam werden, obgleich sie im Wesentlichen gleichzeitig in das Metallbad eingebracht werden.

So kann beispielsweise eine Komponente einen Schmelzpunkt zwischen 350 °C und 750 °C, vorzugsweise einen Schmelzpunkt zwischen 400 °C und 500 °C, und die andere Komponente einen Schmelzpunkt zwischen 450 °C und 800 °C, vorzugsweise einen Schmelzpunkt zwischen 600 °C und 700 °C, aufweisen.

Abgesehen davon, dass im Wesentlichen die chemische Zusammensetzung sowie der Kristallaufbau den Schmelzpunkt bestimmen, lässt sich der Vorgang, mit welchem die Komponenten mit dem Metallbad reagieren, auch über die Korngrößen der Komponenten beeinflussen. Beispielsweise benötigen große Festkörper länger, um mit dem Bad zu reagieren, als ansonsten identische kleinere Festkörper. Insofern ist es von Vorteil, wenn die die beiden Komponenten ggf. unterschiedliche Korngrößen aufweisen.

Es versteht sich hierbei, dass die Korngrößen einer Komponente innerhalb einer bestimmten Bandbreite variieren können. Vorzugsweise liegt diese zwischen 0 mm und 6 mm, insbesondere zwischen 0,5 mm und 4 mm bzw. zwischen 0,8 mm und 3 mm. Hierbei versteht es sich, dass Korngrößen in der Regel in Verteilungen, beispielsweise in Gaußschen Verteilungen, vorliegen. Wird die Korngröße über Siebungen definiert, so ist die Verteilung in der Regel oberhalb eines bestimmten Wertes nahezu unstetig auf Null gesetzt, da Körner oberhalb einer bestimmten Größe nicht durch ein Sieb gelangen können. Ebenso liegen in einer Mischung feinste Partikel in Staubform vor, die jedoch bei vorliegendem Verfahren in der Regel zu nicht erwünschten Ergebnissen führen, da sie unmittelbar und unkontrolliert mit dem Metallbad abreagieren. Auch derartige Stäube bzw. Feinanteile werden vorliegend für die Korngrößen als unbeachtlich angesehen.

Andererseits kann durch eine ausreichende Festigkeit der Komponenten das Auftreten derartiger Stäube insbesondere durch nachträglichen Abrieb minimiert werden. Hierbei ist es vorteilhaft, wenn die Komponenten bei einem Abriebtest nur eine definierte Menge an Abrieb erzeugen, die vorzugsweise unter 20 %, insbesondere unter 10 %, 5 % bzw. 3 %, gemessen nach folgender Messmethode liegt.

In einer Siebmaschine HAVER EML 200 digital T der Firma Haver werden zunächst, zur Bestimmung einer Ausgangskornverteilung 150 g bis 200 g auf ein oberstes Sieb eines Siebturmes dieser Siebmaschine gegeben. An der Siebmaschine wird ein Siebintervall der Größe 5 - bei einem Maximum der Größe 9 - eingestellt, welches ungefähr einer Minute entspricht. Die Intensität wird ebenfalls mit der Größe 5 - bei einem Maximum der Größe 9 - eingestellt. Die gesamte Siebdauer einschließlich der Pausen beträgt dann ungefähr zehn Minuten. Danach werden die Mengen der verschiedenen Siebfraktionen zur Bestimmung der Ausgangskornverteilung ausgewogen. Zur Bestimmung der Kornverteilung nach definierter mechanischer Beanspruchung wird das Siebintervall auf 0 eingestellt, was einer kontinuierlichen Siebung entspricht. Die Intensität wird auf das Maximum, also auf die Größe 9, eingestellt. Die gesamte Siebdauer beträgt dann ungefähr vierzig Minuten. Anschließend werden die Siebfraktionen wieder ausgewogen. Der Abrieb bestimmt sich aus dem Unterkorn, welches sich zusätzlich nach dem Ausgangswert ansammelt (= 100 * (Unterkorn - Unterkorn_{Ausgangskornverteilung})/ Unterkorn_{Ausgangskornverteilung}), und sollte, wie bereits vorstehende dargestellt, vorzugsweise unter 20 % liegen.

Im Ausgangsmaterial sollte vorzugsweise bei entsprechendem Messaufbau ein Unterkornanteil bzw. der Feinanteil von unter 10 %, insbesondere von unter 5 %, 3 % bzw. 1 %, zu finden sein. Wie bereits vorstehend angesprochen sind ein derartiger Feinanteil bzw. entsprechende Stäube für vorliegende Erfindung nicht förderlich.

Vorzugsweise sind die Festigkeit und/oder der Anteil an Feinkorn bei beiden Komponenten im Wesentlichen gleich, so dass die beiden Komponenten den gleichen mechanischen Belastungen, wie beispielsweise bei einem Einblasen, unterworfen werden können.

Durch einen Kristallwasseranteil wenigstens einer der Komponenten unter 5 %, vorzugsweise unter 1 %, insbesondere unter 0,5 %, kann sichergestellt werden, dass nicht unnötig insbesondere Wasserstoff H in das Metallbad eingetragen wird. Kristallwasser kann beispielsweise nach der "Titration nach Karl Fischer" bestimmt werden, indem eine volumetrische Karl-Fischer-Titration mit gängigen Standardparametern durchgeführt wird. Durch an sich bekannte Maßnahmen, wie beispielsweise eine feuchtigkeitsdichte Lagerung, kann ein nachträgliches Eindringen von Kristallwasser auch bei einer längeren Lagerzeit minimiert werden. In der Regel sind kurzzeitige Expositionen, insbesondere unmittelbar vor dem Einblasen, unkritisch, da das Eindringen von Kristallwasser in der Regel längere Zeit benötigt. Unter Umständen kann jedoch auch eine kurzzeitige Exposition, beispielsweise durch Arbeiten in einer feuchtigkeitsdichten Umgebung, mit an sich bekannten Maßnahmen vermieden werden.

Es versteht sich, dass der Kristallwasseranteil, die Korngrößenverteilung und die Festigkeit auch unabhängig von den übrigen Merkmalen vorliegender Erfindung bei festen Metallbadflussmitteln die entsprechenden Vorteile zeigen.

In einer bevorzugten Ausgestaltung umfasst eine der Komponenten Bestandteile an Erdalkali- und/oder Alkalichloriden, ggf. unter Zusatz von Fluoriden, insbesondere von Erdalkali- und/oder Alkalifluoriden. Besonders bevorzugt ist eine der Komponenten aus Bestandteilen von Mg-, Ba-, Sr- und/oder Ca-Chlorid bereitgestellt. Als Zusatz kann beispielsweise Na-Chlorid und/oder K-Chlorid sowie K- und/oder Ca-Fluorid beigegeben werden.

Bevorzugt umfasst die zweite der beiden Komponenten Bestandteile an Fluoriden und Alkalichloriden, ggf. unter Zusatz von Erdalkalichloriden. Insbesondere kann die zweite der beiden Komponenten Bestandteile von Erdalkalifluoriden, Aluminiumfluorid und/oder Doppelsalzen hiervon aufweisen, wobei ggf. Alkalifluoride zugesetzt sein können.

Alternativ bzw. kumulativ hierzu kann wenigstens eine zweite der beiden Komponenten Carbonate, Sulfate und/oder Nitrate, insbesondere Alkali- und/oder Erdalkalicarbonate, -sulfate und/oder -nitrate der in dieser Komponente enthaltenen Alkali- und/oder Erdalkalimetalle, enthalten. Hierdurch lässt sich ebenfalls das Abkrätzverhalten dieser Komponente gezielt beeinflussen.

Es versteht sich, dass die vorstehend beschriebenen Zusammensetzungen auch unabhängig von den übrigen Merkmalen vorliegender Erfindung vorteilhaft sein können, um Metallbäder, insbesondere Aluminiumbäder, geeignet reinigen zu können. Insbesondere durch vorliegende Erfindung können jedoch die Zusammensetzungen sukzessive in dem Metallbad wirksam werden, so dass durch die zeitliche Reihenfolge - oder auch durch eine Wirkung an unterschiedlichen Orten - gegenläufige Effekte vermieden und die Reinheit des Metalls verbessert werden können.

Um die Wirksamkeit der einzelnen Komponenten sicher zu stellen, ist es von Vorteil, wenn diese mit nicht unter 5 % jeweils in dem Metallbadflussmittel vorliegen. Auf diese Weise ist sichergestellt, dass die erste der beiden Komponenten mit einem Anteil zwischen 5 % und 95 % vorliegen kann, während die andere der beiden Komponenten den Rest des Metallbadflussmittels bilden kann.

Es versteht sich, dass vorliegende Erfindung nicht nur für Al-Bäder sondern auch für andere Metallbäder, insbesondere auch für Mg-Bäder, vorteilhaft zur Anwendung kommen kann.

Weitere Vorteile, Ziele und Eigenschaften vorliegender Erfindung werden anhand des nachfolgend erläuterten Ausführungsbeispiels beschrieben.

Demnach werden MgCl₂ und KCl in einem Verhältnis von 60 % zu 40 % zusammengeschmolzen und granuliert. Das Granulat hat einen Schmelzpunkt zwischen 440 °C und 480 °C und bildet die erste Komponente eines entsprechenden Metallbadflussmittels.

Der ersten Komponente können, je nach Erfordernissen, noch Fluoride, insbesondere CaF₂ oder KF beigegeben werden.

Für die zweite Komponente werden KCl und AlF₃ und/oder K₃AlF₆, miteinander verbunden und granuliert. Dieses Granulat hat einen Schmelzpunkt bei ungefähr 600 °C.

Anschließend werden beide Granulate zu dem erfindungsgemäßen Metallbadflussmittel vermischt. Die Korngröße beider Granulate liegt zwischen 0,8 mm und 3 mm und ist bei diesem Ausführungsbeispiel für beide Granulate im Wesentlichen gleich und in im Wesentlichen gleicher Verteilung. Der Anteil von Feinkorn, also Korn unter 0,8 mm wird auf unter 1 % gesenkt, wobei die Festigkeit beider Komponenten derart gewählt ist, dass nach 3 mal 10 Minuten Vibration mit einer jeweils ein minütigen Pause in einem Siebturm von Haver & Böcker bei höchster Amplitude lediglich 1 % mehr Feinkorn im Untersieb zu finden ist. Der Kristallwasseranteil, insbesondere auch der MgCl₂-haltigen Komponente, wurde auf unter 0,5 % gesenkt.

Insbesondere können die folgenden chemischen Zusammensetzungen entsprechend als Komponenten bereitgestellt werden:

| Komponente A | Komponente B |
|---|---|
| 60% MgCl₂ / 40% KCl | 90% KCl / 10% AlF₃ |
| 40% MgCl₂ / 60% KCl | 10% NaCl / 10% AlF₃ / 80% KCl |
| 36% MgCl₂ / 54% KCl / 10% CaF₂ | 5% K₂SO₄ / 15% K₃AlF₆ / 80% KCl |

wobei die folgenden Kornverteilungen vorteilhaft sind:

| Komponente A | Komponente B |
|---|---|
| 0,4 - 1,5 mm | 1,5 - 2,5 mm |
| 0,8 - 3,0 mm | 0,8 - 3,0 mm |
| 1,0 - 2,5 mm | 2,0 - 3,0 mm |

Dieses Metallbadflussmittel kann dann in ein Aluminiumbad eingeblasen werden. Es zeigt sich, dass die durch dieses Metallbadflussmittel bereitgestellte Krätze verhältnismäßig trocken ist und leicht abgenommen werden kann. Die Reinheit des Aluminiums ist hervorragend und entspricht mindestens der Reinheit eines Aluminiumbades, welches mit einem herkömmlichen Metallbadflussmittel, wie beispielsweise einer Mischung aus MgCl₂ und KCl, behandelt wurde, wobei jedoch bei diesem Metallbadflussmittel nach dem Stand der Technik Verluste an Aluminium zu verzeichnen sind.

## Patentansprüche

1. Festes Metallbadflussmittel, **dadurch gekennzeichnet, dass** das Metallbadflussmittel aus mindestens zwei separaten festen Komponenten besteht.

2. Metallbadflussmittel nach Anspruch 1, **dadurch gekennzeichnet, dass** das Metallbadflussmittel aus einem mindestens zwei Komponenten aufweisenden Granulat besteht.

3. Metallbadflussmittel nach Anspruch 2, **dadurch gekennzeichnet, dass** jede der separaten festen Komponenten des Metallbadflussmittels eine Komponente des Granulats darstellt.

4. Metallbadflussmittel nach einem der Ansprüche 1 bis 3, **dadurch gekennzeichnet, dass** wenigstens eine erste der beiden Komponenten Alkali- und/oder Erdalkali-Ionen, insbesondere Na-, K-, Mg-, Ba-, Sr- und/oder Ca-Ionen, enthält.

5. Metallbadflussmittel nach einem der Ansprüche 1 bis 4, **dadurch gekennzeichnet, dass** wenigstens eine erste der beiden Komponenten Cl- und/oder F-Ionen enthält.

6. Metallbadflussmittel nach Ansprüchen 4 und 5, **dadurch gekennzeichnet, dass** die erste der beiden Komponenten Alkali- und/oder Erdalkali-Chloride, insbesondere Na-, K-, Mg-, Ba-, Sr- und/oder Ca-Chloride, enthält

7. Metallbadflussmittel nach Anspruch 6, **dadurch gekennzeichnet, dass** die erste der beiden Komponenten K- und/oder Ca-Fluoride enthält.

8. Metallbadflussmittel nach einem der Ansprüche 1 bis 7, **dadurch gekennzeichnet, dass** wenigstens eine zweite der beiden Komponenten Alkali- und/oder Erdalkali-Ionen, insbesondere Na-, K-, Mg-, Ba-, Sr- und/oder Ca-Ionen, enthält.

9. Metallbadflussmittel nach einem der Ansprüche 1 bis 8, **dadurch gekennzeichnet, dass** wenigstens eine zweite der beiden Komponenten Aluminiumionen enthält

10. Metallbadflussmittel nach einem der Ansprüche 1 bis 9, **dadurch gekennzeichnet, dass** wenigstens eine zweite der beiden Komponenten Cl- und/oder F-Ionen enthält.

11. Metallbadflussmittel nach Ansprüchen 8 und 10, **dadurch gekennzeichnet, dass** die zweite Komponente Fluoride und Alkalichloride enthält.

12. Metallbadflussmittel nach Ansprüchen 9 und 10, **dadurch gekennzeichnet, dass** die zweite Komponente Aluminiumfluoride enthält.

13. Metallbadflussmittel nach Ansprüchen 11 und 12, **dadurch gekennzeichnet, dass** die zweite Komponente Erdalkalifluoride, Aluminiumfluoride und/oder Doppelsalze hiervon enthält.

14. Metallbadflussmittel nach einem der Ansprüche 11 bis 13, **dadurch gekennzeichnet, dass** die zweite Komponente Erdalkalichloride enthält.

15. Metallbadflussmittel nach einem der Ansprüche 1 bis 14, **dadurch gekennzeichnet, dass** wenigstens eine zweite der beiden Komponenten Carbonate, Sulfate und/oder Nitrate enthält.

16. Metallbadflussmittel nach Ansprüchen 8 und 15, **dadurch gekennzeichnet, dass** die Alkali- und/oder Erdalkalicarbonate, -sulfate und/oder -nitrate enthält.

17. Verwendung eines Metallbadflussmittels nach einem der Ansprüche 1 bis 16 in einem Al-Bad.

18. Verwendung eines Metallbadflussmittels nach einem der Ansprüche 1 bis 16 in einem Mg-Bad.

19. Verfahren zur Behandlung eines Metallbades, bei welchem ein festes Metallbadflussmittel dem Metallbad aufgegeben wird, **dadurch gekennzeichnet, dass** zumindest zwei separate feste Komponenten des Metallbadflussmittels vor der Aufgabe vermischt und anschließend gemeinsam dem Metallbad aufgegeben werden.

20. Verfahren nach Anspruch 19, **dadurch gekennzeichnet, dass** das Metallbadflussmittel in das Metallbad eingeblasen wird.

21. Verfahren nach Anspruch 19 oder 20, **dadurch gekennzeichnet, dass** das Metallbad ein Al-Bad ist.

22. Verfahren nach Anspruch 19 oder 20, **dadurch gekennzeichnet, dass** das Metallbad ein Mg-Bad ist.

23. Verfahren zur Herstellung eines Metallbadflussmittels, **dadurch gekennzeichnet, dass** zumindest zwei separate feste Komponenten des Metallbadflussmittels miteinander separierbar vermischt werden.

24. Verfahren nach einem der Ansprüche 19 bis 23, **dadurch gekennzeichnet, dass** die Bestandteile zumindest einer der beiden Komponenten, vorzugsweise beider Komponenten, zunächst miteinander fest zu Bestandteilekörpern verbunden und dann die Bestandteilekörper separat oder gemeinsam granuliert werden.

25. Metallbadflussmittel bzw. Verfahren nach einem der Ansprüche 1 bis 24, **dadurch gekennzeichnet, dass** zumindest eine Komponente des Metallbadflussmittels ein Salz ist.

26. Metallbadflussmittel bzw. Verfahren nach Anspruch 25, **dadurch gekennzeichnet, dass** das Metallflussmittel eine Salzmischung ist, bei welcher jedes der gemischten Salze eine Komponente des Metallflussmittels darstellt.

27. Metallbadflussmittel bzw. Verfahren nach einem der Ansprüche 1 bis 26, **dadurch gekennzeichnet, dass** die beiden Komponenten einen unterschiedlichen Schmelzpunkt aufweisen.

28. Metallbadflussmittel bzw. Verfahren nach Anspruch 27, **dadurch gekennzeichnet, dass** eine erste der beiden Komponenten einen Schmelzpunkt zwischen 350 °C und 750 °C, vorzugsweise einen Schmelzpunkt zwischen 400 °C und 500 °C, und die andere der beiden Komponenten einen Schmelzpunkt zwischen 450 °C und 800 °C, vorzugsweise einen Schmelzpunkt zwischen 600 °C und 700 °C aufweisen.

29. Metallbadflussmittel bzw. Verfahren nach einem der Ansprüche 1 bis 28, **dadurch gekennzeichnet, dass** die beiden Komponenten unterschiedliche Korngrößen aufweisen.

30. Metallbadflussmittel bzw. Verfahren nach einem der Ansprüche 1 bis 29, **dadurch gekennzeichnet, dass** zumindest eine der Komponenten eine Korngröße unter 6 mm, vorzugsweise unter 4 mm, insbesondere unter 3 mm, aufweist.

31. Metallbadflussmittel bzw. Verfahren nach einem der Ansprüche 1 bis 30, **dadurch gekennzeichnet, dass** zumindest eine der Komponenten eine Korngröße über 0,5 mm, insbesondere über 0,8 mm, aufweist.

32. Metallbadflussmittel bzw. Verfahren nach einem der Ansprüche 1 bis 31, **dadurch gekennzeichnet, dass** die Komponenten einen Abrieb unter 20 %, insbesondere unter 10 %, 5 % bzw. 3 %, aufweisen.

33. Metallbadflussmittel bzw. Verfahren nach Anspruch 32, **dadurch gekennzeichnet, dass** der Abrieb beider Komponenten im Wesentlichen gleich ist.

34. Metallbadflussmittel bzw. Verfahren nach einem der Ansprüche 1 bis 33, **dadurch gekennzeichnet, dass** die Komponenten einen Feinanteil von unter 10 %, insbesondere von unter 5 %, 3 % bzw. 1 %, aufweisen.

35. Metallbadflussmittel bzw. Verfahren nach einem der Ansprüche 1 bis 34, **dadurch gekennzeichnet, dass** zumindest eine Komponente des Metallbadflussmittels einen Kristallwasseranteil unter 5 %, vorzugsweise unter 1 %, insbesondere unter 0,5 %, aufweist.

36. Metallbadflussmittel bzw. Verfahren nach einem der Ansprüche 1 bis 35, **dadurch gekennzeichnet, dass** jede der beiden Komponenten mit eine Anteil von nicht unter 5 % in dem Metallbadflussmittel vorliegt.
